# FASCICULE DE BREVET EUROPEEN

(11) **EP 1 055 591 B1**
(45) Date de publication et mention de la délivrance du brevet: **30.07.2003**
(21) Numéro de dépôt: 00401351.2
(22) Date de dépôt: 17.05.2000
(51) Int. Cl.: B62D 55/14

(54) **Dispositif d'entraînement à chenille souple pour véhicule tout terrain**
Antriebseinrichtung mit flexibler Bandraupe für Geländefahrzeuge
Traction device comprising flexible crawler track for an off-road vehicle

(30) Priorité: 28.05.1999 FR 9906805
(43) Date de publication de la demande: 29.11.2000
(73) Titulaire: Otico, 77650 Longueville (FR)
(72) Inventeur: Phely, Olivier, 77650 Sainte Colombe (FR)
(74) Mandataire: Bezault, Jean

(56) Documents cités:
- WO-A-98/16419
- FR-A- 2 711 959
- FR-A- 2 768 387
- US-A- 5 433 515

## Description

L'invention concerne les dispositifs d'entraînement à chenille destinés notamment à la propulsion de véhicules tout terrain, tels que des engins agricoles, viticoles et ostréicoles ou des engins de travaux publics et forestiers.

L'invention concerne plus particulièrement un dispositif d'entraînement à chenille, du type comprenant au moins une chenille formée d'une bande souple sans fin munie intérieurement d'au moins une rangée de plots situés dans le sens de la longueur de la bande, distants entre eux d'un pas constant et délimités chacun par deux faces transversales dans le sens de la largeur de la bande sans fin et par deux faces latérales dans le sens de la longueur de la bande sans fin, ainsi que deux roues principales et des roues de support sur lesquelles s'enroule la bande sans fin.

Dans son brevet FR-A-2 711 959 (93 13211), la demanderesse a proposé un dispositif d'entraînement de ce type, dans lequel chaque plot a sensiblement la forme d'une pyramide au pied de laquelle est définie au moins une piste de roulement. Les faces latérales et les faces transversales du plot sont planes et forment respectivement un angle compris entre 8° et 20° pour les faces latérales et entre 30° et 40° pour les faces transversales par rapport à un plan normal à la bande sans fin de la chenille.

Dans son brevet FR-A-2 768 387 (97 11398), la demanderesse a proposé un dispositif d'entraînement à chenille du type précité, comprenant des aménagements particulièrement avantageux, concernant notamment les roues principales et les roues de support sur lesquelles s'enroule la bande sans fin.

Dans un dispositif d'entraînement à chenille du type précité, les roues principales comprennent habituellement une roue motrice postérieure et une roue non motrice antérieure.

Le plus souvent, la roue non motrice, placée à l'avant, sert également de roue de mise en tension de la chenille et elle est portée par une poutre oscillante, laquelle supporte généralement les roues de support, placées entre la roue antérieure et la roue postérieure.

La roue d'entraînement comporte généralement au voisinage de son plan médian, perpendiculaire à son axe de rotation, une zone d'entraînement formant engrenage d'entraînement des plots de la chenille. Cette zone d'entraînement est généralement formée de taquets régulièrement espacés à la périphérie de la roue et destinés à venir s'engrener dans les espaces vides délimités entre les plots. Ces plots ont une forme choisie facilitant l'engagement et leur dégagement lors de l'engrènement ou du désengrènement de ceux-ci avec la roue motrice.

Les dispositifs d'entraînement de ce type sont destinés à équiper des véhicules qui peuvent être amenés à travailler dans des conditions particulièrement difficiles, notamment sur des terrains accidentés.

Dans des conditions extrêmes, par exemple dans le cas d'un travail en forte pente et en dévers, la chenille peut être soumise à des efforts latéraux importants tendant à faire sortir la chenille, spécialement de la roue motrice postérieure, mais aussi de la roue non motrice antérieure.

On connaît aussi, d'après WO 98/16419, un dispositif d'entraînement à chenille, du type défini en introduction, lequel comprend en outre un organe de guidage placé entre une roue principale et une roue de support adjacente et comportant des galets propres à encadrer les faces latérales des plots, afin d'assurer un guidage et une stabilisation de la bande sans fin dans la région de l'organe de guidage.

Toutefois, dans ce dispositif connu, les galets ont le même diamètre que la roue de support adjacente, ce qui ne permet pas d'optimiser le guidage et la stabilisation de la bande sans fin.

La demanderesse s'est par conséquent posé le problème d'améliorer encore le guidage et la stabilisation de la bande sans fin, spécialement dans la région proche d'une roue principale.

Elle propose à cet effet un dispositif d'entraînement à chenille, du type connu d'après WO 98/16419, dans lequel les galets de l'organe de guidage ont un diamètre très inférieur au diamètre de la roue de support adjacente.

Du fait de ces différences de diamètre, cet organe de guidage, que l'on peut encore appeler "organe stabilisateur", se loge ainsi dans l'espace libre compris entre une roue principale et la roue de support qui lui est immédiatement adjacente. Il en résulte une amélioration du guidage et de la stabilisation de la bande sans fin.

Du fait que cet organe de guidage comprend des galets qui encadrent les faces latérales des plots, il en résulte une amélioration du guidage de la bande sans fin, dans la région comprise entre cette roue principale et cette roue de guidage adjacente.

Par conséquent, même dans des conditions extrêmes, la chenille se trouve parfaitement guidée et stabilisée et ne risque donc pas de sortir de la roue principale et de se déformer.

Dans une forme de réalisation de l'invention, l'organe de guidage est placé entre une roue principale motrice et une roue de support adjacente.

Dans une autre forme de réalisation de l'invention, l'organe de guidage est placé entre une roue principale non-motrice et une roue de support adjacente.

L'invention s'applique en particulier à un dispositif dans lequel l'une des roues principales ainsi que les roues support sont portées par une poutre oscillante montée à pivotement autour d'un axe. En ce cas, il est avantageux que l'organe de guidage soit solidaire de ladite poutre, en étant porté directement ou indirectement par la poutre.

L'invention s'applique aussi au cas particulier où les roues de support sont regroupées par paires, chaque paire de roues étant portée par un balancier articulé sur la poutre oscillante.

En pareil cas, il est avantageux que l'organe de guidage soit porté par le balancier.

L'organe de guidage peut être situé à une extrémité de la poutre oscillante qui est proche de l'axe d'articulation, ou bien à une extrémité de la poutre oscillante qui est éloignée de l'axe d'articulation.

Bien entendu, il est possible que l'organe de guidage soit porté d'une autre manière, par exemple directement par le châssis supportant le dispositif d'entraînement à chenille.

Dans une forme de réalisation préférentielle, l'organe de guidage comprend deux galets coaxiaux montés fous autour d'un axe et espacés l'un de l'autre.

De préférence, ces galets ont des têtes respectives situées en opposition et propres à venir respectivement en appui contre les deux faces latérales des plots.

Selon une autre caractéristique de l'invention, les têtes des galets sont conformées en fonction de la forme des faces latérales des plots.

Ainsi, il est avantageux que les têtes des galets aient une forme généralement tronconique et se raccordent chacun à une jupe cylindrique.

Lorsque les faces latérales des plots sont généralement planes en formant un angle aigu donné par rapport à un plan normal à la bande sans fin, il est avantageux que les parties tronconiques des têtes des galets fassent un angle aigu plus faible de manière à favoriser un contact des galets avec les faces latérales des plots dans une région proche de la bande sans fin, à la base des plots.

Autrement dit, ceci permet de ménager un jeu plus important entre la tête du plot et le galet, qu'entre la base du plot et le galet.

Dans une forme de réalisation de l'invention, les galets sont montés sur deux pivots coaxiaux portés respectivement par les deux branches d'une chape.

Dans la description qui suit, faite seulement à titre d'exemple, on se réfère aux dessins annexés, sur lesquels :
- la figure 1 est une vue de côté d'un dispositif d'entraînement selon une première forme de réalisation de l'invention;
- la figure 2 est une vue partielle en perspective d'une chenille propre à faire partie du dispositif de la figure 1;
- la figure 3 est une vue en coupe transversale de l'organe de guidage faisant partie du dispositif de la figure 1 ;
- la figure 4 est une vue partielle de côté d'un dispositif selon une deuxième forme de réalisation de l'invention ;
- la figure 5 est une vue partielle de côté d'un dispositif selon une troisième forme de réalisation de l'invention ; et
- la figure 6 est une vue partielle de côté d'un dispositif selon une quatrième forme de réalisation de l'invention.

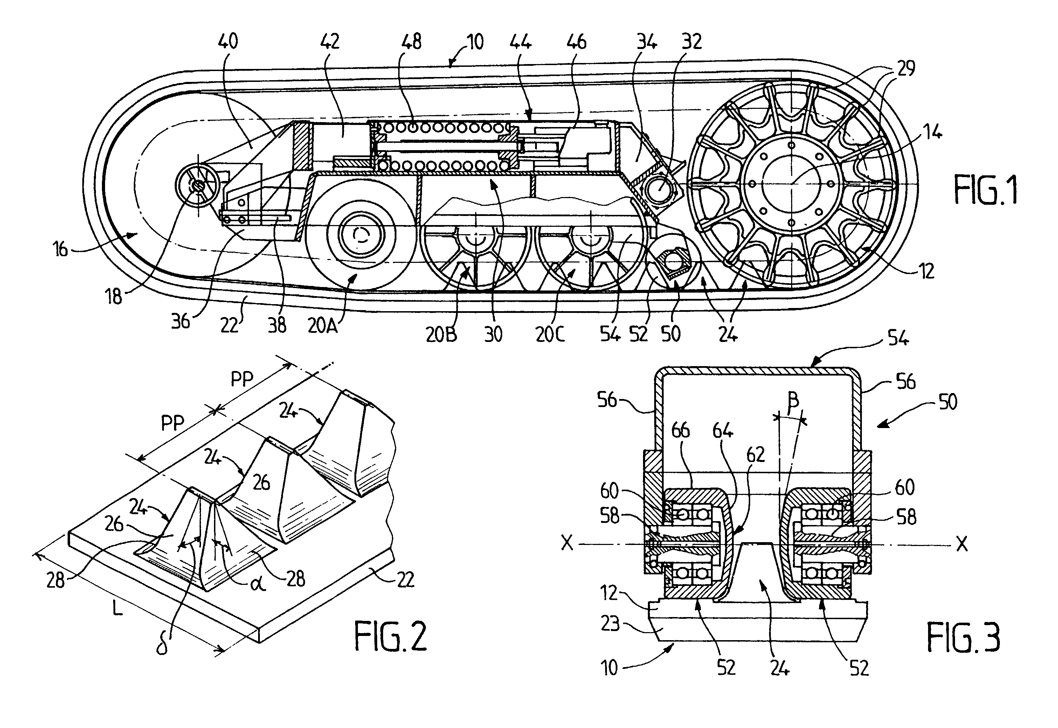

Le dispositif d'entraînement représenté à la figure 1 comprend une chenille souple 10 s'enroulant autour de deux roues principales : une roue motrice postérieure 12 montée à rotation autour d'un axe 14 et une roue non motrice antérieure 16 montée à rotation autour d'un axe 18. La chenille 10 s'enroule également autour de trois roues de support 20A, 20B et 20C, de plus faible diamètre que les roues principales 12 et 16.

La chenille 10 est formée d'une bande souple sans fin 22 réalisée avantageusement en un matériau élastomère, par exemple à base de caoutchouc naturel, renforcée intérieurement par des armatures (non représentées).

La bande sans fin 22 comporte extérieurement une surface de roulement avantageusement munie de crampons 23 (figure 3). Elle est munie intérieurement d'une rangée de plots 24 situés dans le sens de la longueur de la bande et distants entre eux d'un pas constant PP (figure 2). Les plots 24 sont délimités chacun par deux faces transversales 26 s'étendant dans le sens de la largeur L de la bande 22 et par deux faces latérales 28 s'étendant dans le sens de la longueur de la bande sans fin 22. Les faces transversales 26 sont planes et forment un angle 6 compris entre 30° et 40° par rapport à un plan normal à la bande de la chenille, tandis que les faces latérales 28 sont planes et forment un angle a compris entre 8° et 20° par rapport à un plan normal à la bande de la chenille.

Les faces transversales 26 et les faces latérales 28 de chaque plot se raccordent chacun à la bande sans fin par une surface arrondie.

La roue motrice 12 est du type décrit dans les brevets français précités. Elle comprend deux jantes réunies entre elles, à intervalles réguliers, par des taquets d'entraînement 29 disposés parallèlement entre eux à la périphérie de la roue et parallèlement aux génératrices de cette dernière. Les taquets 29 sont destinés à venir s'engrener dans les espaces vides délimités entre les plots 24.

Un véhicule tout terrain comprend deux dispositifs d'entraînement, de configurations symétriques, placés respectivement du côté droit et du côté gauche du véhicule, en étant portés par un châssis approprié.

Comme on peut le voir sur la figure 1, le dispositif comprend en outre une poutre oscillante 30 montée à pivotement autour d'un axe 32 (généralement du châssis du véhicule) qui s'étend parallèlement aux axes respectifs 14 et 18 des roues 12 et 16.

La poutre 30 comporte une extrémité postérieure 34 formant pivot et une extrémité antérieure 36 aménagée pour porter une coulisse 38 sur laquelle peut coulisser une fourche support 40 portant l'axe 18 de la roue 16. La fourche support 40 est fixée à un organe de liaison 42 porté par un mécanisme tendeur et amortisseur 44, lequel est supporté par la poutre 30. Ce mécanisme 44 comprend un vérin 46 et un ressort 48 et il permet de mettre sous tension la fourche 40 en sorte que la roue antérieure 16 joue le rôle de roue de mise en tension de la chenille 10. En outre, le ressort 48 joue le rôle d'amortisseur pour la chenille, lorsque celle-ci roule sur des obstacles. Les roues de support 20A, 20B, et 20C sont portées directement par la poutre oscillante 30. La structure générale d'un tel dispositif est connue par le brevet FR-A-2 768 387 (97 11398) déjà cité.

Conformément à l'invention, le dispositif comprend en outre un organe de guidage 50 placé, dans le mode de réalisation de la figure 1, entre la roue motrice 12 et la roue de support 20C qui lui est immédiatement adjacente. L'organe de guidage 50 comprend (figures 1 et 3) deux galets coaxiaux 52 montés fous autour d'un axe XX et espacés l'un de l'autre. Ces galets sont prévus pour encadrer les faces latérales 28 des plots et améliorer le guidage et la stabilisation de la chenille dans la région comprise entre la roue motrice 12 et la roue de support 20C.

Les galets 52 sont portés par une chape 54, qui est solidaire de la poutre 30 (figure 1). Dans l'exemple, cette chape 54 est fixée à l'extrémité postérieure 34 de la poutre, à proximité de l'axe de pivotement 32.

La chape 54 comprend deux branches 56 parallèles entre elles portant respectivement deux pivots 58 sur lesquels sont montés les galets 52 par l'intermédiaire de roulements 60. Ces galets 52 sont montés en opposition. Ils comprennent chacun une tête 62 comportant une partie 64 de forme générale tronconique rattachée à une jupe cylindrique 66.

La partie tronconique 64 de chacune des têtes 62 forme un angle aigu β par rapport à un plan normal à la bande sans fin 22, cet angle aigu β étant inférieur à l'angle aigu α que forme chacune des faces latérales 28 du plot avec un plan normal à la bande sans fin.

Ceci favorise un appui des galets dans la zone de raccordement des plots 24 avec la bande sans fin 22, c'est-à-dire du côté de la base des plots. Il en résulte qu'il existe un jeu de largeur variable entre la face transversale 28 et la tête 62 du galet, cette largeur étant plus faible du côté de la base du plot.

Les galets 52 encadrent les plots et améliorent ainsi le guidage et la stabilisation de la chenille dans la région comprise entre la roue 12 et la roue de support 20C. Ces galets de guidage sont de préférence réalisés en une matière métallique. Ils ont un diamètre très inférieur à celui de la roue de support adjacente, ce qui permet de loger l'organe de guidage dans un espace de dimensions limitées, dans lequel il serait impossible de loger une autre roue de support. Dans l'exemple de réalisation représenté, chacun des galets 52 possède un diamètre externe qui est sensiblement la moitié de celui d'une roue de support.

De ce fait, lorsque le véhicule est amené à travailler dans des conditions extrêmes et particulièrement délicates, l'organe de guidage 50 stabilise la chenille et l'empêche de se déplacer latéralement par rapport à la roue 12.

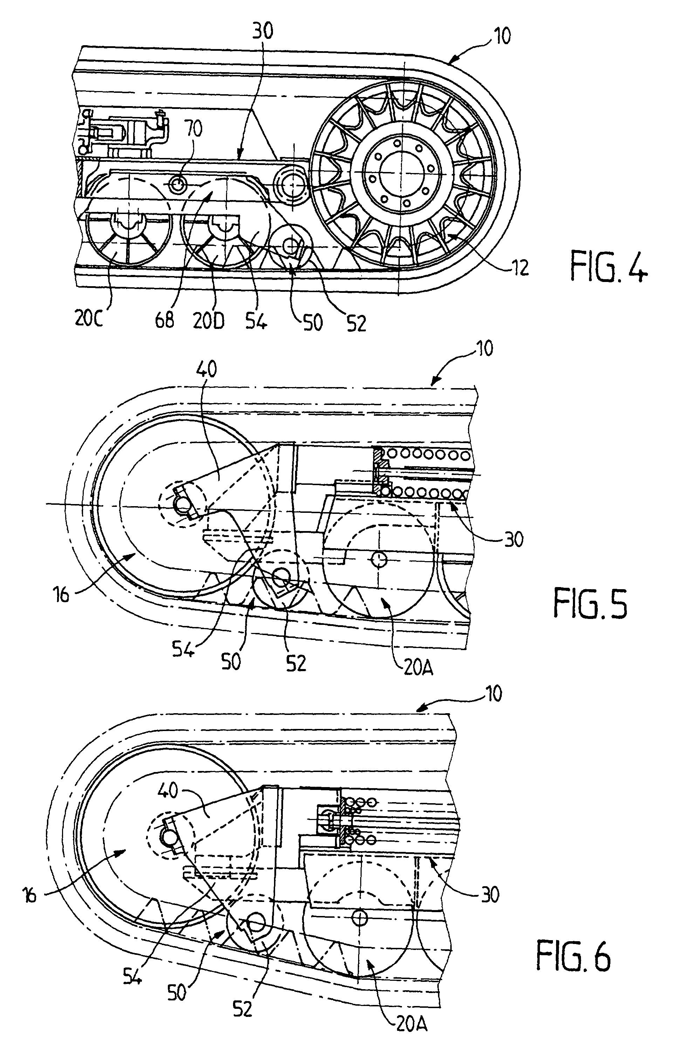

On se réfère maintenant à la figure 4 qui constitue une variante de la réalisation précédente. Dans ce cas, le dispositif d'entraînement comprend quatre roues support regroupées par paires; On voit la dernière paire formée par les roues 20C et 20D qui sont portées par un balancier 68, encore appelé boggie, articulé sur la poutre 30 autour d'un axe 70. C'est donc la roue de support 20D qui est la plus proche de la roue motrice 10. Dans l'exemple représenté, la chape 54 est toujours solidaire de la poutre 30, mais elle est portée par le balancier 68. La chape est ici formée d'une seule pièce avec le balancier. En variante, la chape pourrait être portée directement par la poutre.

Dans la forme de réalisation de la figure 5, le dispositif comprend, en complément, ou en variante, une roue support 50 analogue prévue à l'avant du dispositif, c'est-à-dire entre la roue antérieure 16 et la roue de support 20A immédiatement adjacente. La chape 54 de l'organe 50 est fixée directement à la fourche 40 qui supporte la roue 16.

Ainsi, il est possible de prévoir un organe de guidage 50 proche de la roue motrice 12 et/ou un organe de guidage 50 proche de la roue non-motrice 16.

L'invention peut s'appliquer à différents types de train de roues, comportant un nombre plus ou moins élevé de roues de support. La roue antérieure 16 peut être éventuellement surélevée, et d'un plus petit diamètre que la roue postérieure 12, de manière à venir en contact avec une région de la bande sans fin qui n'est pas directement en contact avec le sol, lorsque le véhicule roule sur un sol horizontal.

La figure 6 montre une forme de réalisation semblable à celle de la figure 5, mais dans laquelle la roue antérieure 16 est une roue surélevée.

L'invention peut également s'appliquer à des chenilles comportant par exemple deux rangées de plots.

L'invention trouve ainsi une application particulière aux engins et véhicules tout terrain, en particulier à ceux destinés à travailler dans des conditions particulièrement difficiles.

## Revendications

1. Dispositif d'entraînement à chenille, comprenant au moins une chenille (10) formée d'une bande souple sans fin (22) munie intérieurement d'au moins une rangée de plots (24) situés dans le sens de la longueur de la bande sans fin, distants entre eux d'un pas constant (PP) et délimités chacun par deux faces transversales (26) dans le sens de la largeur de la bande sans fin et par deux faces latérales (28) dans le sens de la longueur de la bande sans fin, ainsi que deux roues principales (12, 16) et des roues de support (20A, 20B, 20C, 20D) sur lesquelles s'enroule la bande sans fin, le dispositif comprenant en outre un organe de guidage (50) placé entre une roue principale (12, 16) et une roue de support adjacente (20A, 20C, 20D) et comportant des galets (52) propres à encadrer les faces latérales (28) des plots (24), afin d'assurer un guidage et une stabilisation de la bande sans fin dans la région de l'organe de guidage,
**caractérisé en ce que** les galets (52) de l'organe de guidage (50) ont un diamètre très inférieur au diamètre de la roue de support adjacente (20A, 20C, 20D).

2. Dispositif selon la revendication 1, **caractérisé en ce que** l'organe de guidage (50) est placé entre une roue principale motrice (12) et une roue de support adjacente (20C, 20D).

3. Dispositif selon la revendication 1, **caractérisé en ce que** l'organe de guidage (50) est placé entre une roue principale non-motrice (16) et une roue de support adjacente (20A).

4. Dispositif selon l'une des revendications 1 à 3, dans lequel l'une (16) des roues principales ainsi que les roues de support (20A, 20B, 20C, 20D) sont portées par une poutre oscillante (30) montée à pivotement autour d'un axe (32), **caractérisé en ce que** l'organe de guidage (50) est solidaire de ladite poutre oscillante (30).

5. Dispositif selon la revendication 4, **caractérisé en ce que** l'organe de guidage (50) est porté directement par la poutre oscillante (30)

6. Dispositif selon la revendication 4, dans lequel les roues de support (20A, 20B, 20C, 20D) sont regroupées par paire, dont chaque paire est portée par un balancier (68) articulé sur la poutre oscillante (30), **caractérisé en ce que** l'organe de guidage (50) est porté par le balancier (68).

7. Dispositif selon l'une des revendications 4 à 6, **caractérisé en ce que** l'organe de guidage (50) est situé à une extrémité (34) de la poutre oscillante (30), qui est proche de l'axe d'articulation (32).

8. Dispositif selon l'une des revendications 4 à 6, **caractérisé en ce que** l'organe de guidage (50) est situé à une extrémité (36) de la poutre oscillante (30), qui est éloignée de l'axe d'articulation (32).

9. Dispositif selon l'une des revendications 1 à 8, **caractérisé en ce que** l'organe de guidage (50) comprend deux galets coaxiaux (52) montés fous autour d'un axe (XX) et espacés l'un de l'autre.

10. Dispositif selon la revendication 9, **caractérisé en ce que** les galets (52) ont des têtes respectives (62) situées en opposition et propres à venir respectivement en appui contre les faces latérales (28) des plots (24).

11. Dispositif selon la revendication 10, **caractérisé en ce que** les têtes (62) des galets (52) sont conformées en fonction de la forme des faces latérales (28) des plots (24).

12. Dispositif selon l'une des revendications 10 et 11, **caractérisé en ce que** les têtes (62) des galets (52) ont une partie généralement tronconique (64) et se raccordent chacune à une jupe cylindrique (66).

13. Dispositif selon la revendication 12, dans lequel les faces latérales (28) des plots (24) sont généralement planes et forment un angle aigu donné (α) par rapport à un plan normal à la bande sans fin (22), **caractérisé en ce que** les parties tronconiques (64) des têtes (62) des galets (52) font un angle aigu (β) plus faible de manière à favoriser un contact des galets (52) avec les faces latérales (28) des plots dans une région proche de la bande sans fin (22).

14. Dispositif selon l'une des revendications 9 à 13, **caractérisé en ce que** les galets (52) sont montés sur deux pivots coaxiaux (58) portés respectivement par les deux branches (56) d'une chape (54).

## Patentansprüche

1. Gleiskettenantriebsvorrichtung mit wenigstens einer Gleiskette (10), die aus einem endlosen biegsamen Band (22) gebildet ist, das innen mit wenigsten einer Reihe von Vorsprüngen oder Zähnen (24) versehen ist, die in Richtung der Länge des Endlosbandes angeordnet sind, wobei sie untereinander mit einem konstanten Schritt (PP) beabstandet sind und jeweils durch zwei Querseiten (26) in Richtung der Breite des Endlosbandes und durch zwei seitliche Seiten (28) in Richtung der Länge des Endlosbandes begrenzt sind, sowie mit zwei Haupträdern (12, 16) und Stützrädern (20 A, 20 B, 20 C, 20 D) auf denen das Endlosband umläuft, wobei die Vorrichtung weiterhin ein Führungsorgan (50) aufweist, das zwischen einem Hauptrad (12, 16) und einem benachbarten Stützrad (20 A, 20 C, 20 D) angeordnet ist, und Walzen (52) aufweist, die geeignet sind, die seitlichen Seiten (28) der Zähne (24) einzurahmen, und eine Führung und eine Stabilisation des Endlosbandes im Bereich des Führungsorgans sicherzustellen,
**dadurch gekennzeichnet, daß** die Walzen (52) des Führungsorgans (50) einen Durchmesser aufweisen, der deutlich geringer ist als der Durchmesser des benachbarten Stützrades (20 A, 20 C, 20 D).

2. Vorrichtung nach Anspruch 1, **dadurch gekennzeichnet, daß** das Führungsorgan (50) zwischen einem angetriebenen Hauptrad (12) und einem benachbarten Stützrad (20 C, 20 D) angeordnet ist.

3. Vorrichtung nach Anspruch 1, **dadurch gekennzeichnet, daß** das Führungsorgan (50) zwischen einem nichtangetriebenen Hauptrad (16) und einem benachbarten Stützrad (20 A) angeordnet ist.

4. Vorrichtung nach einem der Ansprüche 1 bis 3, bei der eines (16) der Haupträder sowie die Stützräder (20 A, 20 B, 20 C, 20 D) durch einen oszillierenden Balken (30) getragen sind, der schwenkbeweglich um eine Achse (32) gelagert ist, **dadurch gekennzeichnet, daß** das Führungsorgan (50) mit dem oszillierenden Balken (30) verbunden ist.

5. Vorrichtung nach Anspruch 4, **dadurch gekennzeichnet, daß** das Führungsorgan (50) direkt durch den oszillierenden Balken (30) getragen wird.

6. Vorrichtung nach Anspruch 4, bei der die Stützräder (20 A, 20 B, 20 C, 20 D) paarweise gruppiert sind, von denen jedes Paar durch einen Schwinghebel (68) getragen wird, der an dem oszillierenden Balken (30) angelenkt ist, **dadurch gekennzeichnet, daß** das Führungsorgan (50) von dem Schwinghebel (68) getragen wird.

7. Vorrichtung nach einem der Ansprüche 4 bis 6, **dadurch gekennzeichnet, daß** das Führungsorgan (50) an einem Ende (34) des oszillierenden Balkens (30) angeordnet ist, das sich in der Nähe der Gelenkachse (32) befindet.

8. Vorrichtung nach einem der Ansprüche 4 bis 6, **dadurch gekennzeichnet, daß** das Führungsorgan (50) sich an einem Ende (36) des oszillierenden Balkens (30) befindet, das von der Gelenkachse (32) entfernt ist.

9. Vorrichtung nach einem der Ansprüche 1 bis 8, **dadurch gekennzeichnet, daß** das Führungsorgan (50) zwei koaxiale Walzen (52) aufweist, die frei um eine Achse (XX) angeordnet sind und voneinander beabstandet sind.

10. Vorrichtung nach Anspruch 9, **dadurch gekennzeichnet, daß** die Walzen (52) entsprechende Köpfe (62) aufweisen, die einander gegenüberliegend angeordnet sind und in der Lage sind entsprechend in Anlage gegen die seitlichen Seiten (28) der Zähne (24) zu kommen.

11. Vorrichtung nach Anspruch 10, **dadurch gekennzeichnet, daß** die Köpfe (62) der Walzen (52) in Abhängigkeit von der Form der seitlichen Seiten (28) der Zähne (24) geformt sind.

12. Vorrichtung nach einem der Ansprüche 10 oder 11, **dadurch gekennzeichnet, daß** die Köpfe (62) der Walzen (52) einen im Allgemeinen kegelstumpfförmigen Abschnitt (64) aufweisen und sich jeweils mit einer zylindrischen Schürze (66) verbinden.

13. Vorrichtung nach Anspruch 12, bei der die seitlichen Seiten (28) der Zähne (24) im Allgemeinen eben sind und einen vorgegebenen spitzen Winkel (α) bezüglich einer Ebene bilden, die senkrecht zum Endlosband (22) verläuft, **dadurch gekennzeichnet, daß** die kegelstumpfförmigen Abschnitte (64) der Köpfe (62) der Walzen (52) einen geringeren spitzen Winkel (β) bilden, um einen Kontakt der Walzen (52) mit den seitlichen Seiten (28) der Zähne in einem Bereich in der Nähe des Endlosbandes (22) zu unterstützen.

14. Vorrichtung nach einem der Ansprüche 9 bis 13, **dadurch gekennzeichnet, daß** die Walzen (52) auf zwei koaxialen Gelenkzapfen (58) angebracht sind, die jeweils durch zwei Arme (56) einer Abdeckkappe (54) getragen werden.

## Claims

1. Traction device with a crawler, comprising at least one crawler (10) formed from a flexible loop belt (22) provided internally with at least one row of blocks (24), arranged in the direction of the length of the loop belt, separated at a constant distance (PP) and each defined by two transverse faces (26) in the direction of the width of the loop belt and by two lateral faces (28) in the direction of the length of the loop belt, as well as two principal wheels (12, 16) and support wheels (20A, 20B, 20C, 20D) on which the loop belt is wound, the device furthermore comprising a guide member (50) arranged between a principal wheel (12, 16) and an adjacent support wheel (20A, 20C, 20D) and comprising pulleys (52) to surround the lateral faces (28) of the blocks (24) to ensure that the loop belt is guided and stabilised in the area of the guide member, **characterised in that** the pulleys (52) of the guide member (50) are of a much smaller diameter than that of the adjacent support wheel (20A, 20C, 20D).

2. Device according to claim 1, **characterised in that** the guide member (50) is arranged between a principal drive wheel (12) and an adjacent support wheel (20C, 20D).

3. Device according to claim 1, **characterised in that** the guide member (50) is arranged between a principal non-drive wheel (16) and an adjacent support wheel (20A).

4. Device according to one of claims 1 to 3, where one of the principal wheels (16) as well as the support wheels (20A, 20B, 20C, 20D) are carried by an oscillating beam (30) pivotally mounted about an axle (32), **characterised in that** the guide member (50) is integral with the said oscillating beam (30).

5. Device according to claim 4, **characterised in that** the guide member (50) is directly carried by the oscillating beam (30).

6. Device according to claim 4, where the support wheels (20A, 20B, 20C, 20D) are grouped in pairs, each pair being carried by a compensating beam (68) articulated on the oscillating beam (30), **characterised in that** the guide member (50) is carried by the compensating beam (68).

7. Device according to one of claims 4 to 6, **characterised in that** guide member (50) is arranged at an end (34) of the oscillating beam (30), which is adjacent to the articulation axle (32).

8. Device according to one of claims 4 to 6, **characterised in that** the guide member (50) is arranged at an end (36) of the oscillating beam (30), which is remote from the articulation axle (32).

9. Device according to one of claims 1 to 8, **characterised in that** the guide member (50) comprises two co-axial pulleys (52) loosely mounted about an axis (XX) and separate from each other.

10. Device according to claim 9, **characterised in that** the pulleys (52) have respective heads (62) arranged oppositely and intended to abut respectively against the lateral faces (28) of the blocks (24).

11. Device according to claim 10, **characterised in that** the heads (62) of the pulleys (52) are formed according to the shape of the lateral faces (28) of the blocks (24).

12. Device according to one of claims 10 and 11, **characterised in that** the heads (62) of the pulleys (52) have a generally shortened portion (64) and they are connected to a cylindrical skirt (66).

13. Device according to claim 12, where the lateral faces (28) of the blocks (24) are generally plane and form a sharp acute angle (α) relative to a normal plane of the loop belt (22), **characterised in that** the shortened portions (64) of the heads (62) of the pulleys (52) form a smaller acute angle (β) to encourage contact between the pulleys (52) and the lateral faces (28) of the blocks in an area close to the loop belt (22).

14. Device according to one of claims 9 to 13, **characterised in that** the pulleys (52) are mounted on two co-axial pivots (58) carried respectively by two arms (56) of a tread (54).
